# FASCICULE DE BREVET EUROPEEN

(11) **EP 2 028 360 B1**
(45) Date de publication et mention de la délivrance du brevet: **12.01.2011**
(21) Numéro de dépôt: 08161144.4
(22) Date de dépôt: 25.07.2008
(51) Int. Cl.: F02K 1/34, F02K 1/72, F02K 3/06

(54) **Turbomachine à double flux à réduction de bruit de jet**
Zweistrom-Strömungsmaschine mit reduziertem Strahlgeräusch
Dual-flow turbomachine with jet noise reduction

(30) Priorité: 23.08.2007 FR 0757144
(43) Date de publication de la demande: 25.02.2009
(73) Titulaire: Snecma, 75015 Paris (FR)
(72) Inventeur: Beutin, Bruno Albert, 91000 Evry (FR); Derenes, Jacky Raphaël Michel, 91100 Corbeil-Essonnes (FR); Eichstadt, Frédéric Paul, 77000 Livry Sur Seine (FR); Vuillemin, Alexandre Alfred Gaston, 77300 Fontainebleau (FR)
(74) Mandataire: Boura, Olivier

(56) Documents cités:
- EP-A- 0 541 346
- EP-A- 1 553 282
- EP-A- 1 580 417
- FR-A- 2 039 393
- US-A- 5 603 531

## Description

### Arrière-plan de l'invention

La présente invention concerne la réduction de bruit de jet en sortie d'une tuyère de turbomachine à double flux. Elle vise plus précisément une turbomachine à double flux à réduction de bruit de jet.

La pollution sonore est devenue aujourd'hui l'un des sujets de préoccupation pour les motoristes qui sont de plus en plus confrontés à la nuisance acoustique de leurs turbomachines. Les sources de bruit d'une turbomachine sont nombreuses mais il a été constaté que le bruit de jet en sortie de la tuyère est le bruit prédominant notamment lors de la phase de décollage d'un avion.

Les autorités de certification étant de plus en plus exigeantes face aux émissions acoustiques des turbomachines, des efforts ont été demandés aux motoristes pour réduire le bruit de leurs turbomachines, et notamment le bruit de jet en sortie de tuyère.

Typiquement, une turbomachine à double flux comporte une soufflante entraînée par un générateur de gaz, un canal annulaire primaire pour l'écoulement d'un flux gazeux primaire issu du générateur de gaz, ce canal primaire étant délimité extérieurement par un capotage primaire, et un canal annulaire secondaire de soufflante pour l'écoulement d'un flux gazeux secondaire de soufflante, ce canal secondaire étant disposé coaxialement au canal primaire et délimité extérieurement par une nacelle.

Dans cette turbomachine, le bruit de jet provient essentiellement des mélanges par cisaillement entre les flux gazeux primaire et secondaire et entre le flux secondaire et un flux d'air externe contournant la nacelle. Ce bruit est un bruit à large bande de fréquence généré par deux types de source acoustique : un bruit à haute fréquence provenant des petites structures turbulentes du mélange entre les flux et généré près de la tuyère ; et un bruit à basse fréquence provenant des grosses structures tourbillonnaires apparaissant loin du jet.

Différentes solutions ont été élaborées pour réduire le bruit de jet en sortie de tuyère. Ces solutions se basent sur le principe consistant à augmenter le mélange entre les flux gazeux.

L'une des solutions connues consiste à munir la turbomachine d'une pluralité de motifs répétitifs répartis sur toute la circonférence du bord de fuite du capotage primaire et/ou de la nacelle. Par la mise en place de tels motifs, le mélange entre les flux s'effectue par la création de tourbillons (ou vortex) près de la tuyère pour mieux dissiper l'énergie cinétique, et par conséquent réduire l'intensité turbulente des gros tourbillons constituant les sources de bruit majeures. On pourra se référer par exemple aux publications US 6,532,729 et US 2002/0164249-A1.

Une autre solution connue consiste à prélever de l'air dans la turbomachine pour l'injecter au niveau du bord de fuite du capotage primaire et/ou de la nacelle. Un tel soufflage d'air permet également de favoriser le mélange entre les flux par la création de tourbillons près de la tuyère pour mieux dissiper l'énergie cinétique. On pourra se référer par exemple aux publications EP 1,580,417 et EP 1,580,418.

Le document FR 2 039 393 décrit une turbomachine comprenant les caractéristiques du préambule de la revendication 1.

La présente invention vise l'implantation d'une telle solution de réduction de bruit de jet par soufflage d'air à une turbomachine dont le système d'inversion de poussée est du type à grilles.

Pour la mise en oeuvre d'un système d'inversion de poussée du type à grilles, la nacelle comporte, dans sa partie aval, deux capots d'inversion de poussée en forme de demi-cylindres qui peuvent coulisser vers l'amont et vers l'aval parallèlement à l'axe longitudinal de la turbomachine.

Or, la présence de ces capots mobiles longitudinalement pose un problème évident d'acheminement de l'air depuis son point de prélèvement dans la turbomachine vers le bord de fuite de la nacelle à partir duquel il est soufflé. En effet, le circuit d'acheminement de l'air qui transite nécessairement par ces capots d'inversion de poussée doit tenir compte de la mobilité de ces derniers.

En outre, lorsque la nacelle d'une telle turbomachine comporte également dans sa partie centrale deux capots de maintenance aptes à pivoter autour de charnières parallèles à l'axe longitudinal de la turbomachine, le circuit d'acheminement de l'air prélevé est encore plus compliqué à réaliser.

### Objet et résumé de l'invention

La présente invention vise à remédier aux inconvénients précités en proposant une implantation simple et efficace d'une réduction de bruit de jet par soufflage d'air sur une turbomachine dont la nacelle comporte des capots d'inversion de poussée qui sont mobiles.

Ce but est atteint grâce à une turbomachine à double flux, comportant une soufflante entraînée par un générateur de gaz, un canal annulaire de soufflante délimité extérieurement par une nacelle, et un canal annulaire primaire d'écoulement d'un flux gazeux issu du générateur de gaz, la nacelle comportant d'amont en aval :
une manche fixe d'entrée d'air ;
deux capots demi-cylindriques de maintenance ; et
deux capots demi-cylindriques d'inverseur de poussée qui sont mobiles par rapport à la manche d'entrée d'air par coulissement selon une direction parallèle à l'axe longitudinal de la turbomachine ;
caractérisée en ce qu'elle comporte en outre au moins un orifice de prélèvement d'air dans le canal primaire, l'orifice débouchant dans une canalisation de prélèvement d'air logée à l'intérieur de la manche d'entrée d'air de la nacelle, la canalisation de prélèvement d'air débouchant au niveau du pylône dans deux canalisations de diffusion d'air solidaires chacune d'un capot de maintenance, chaque canalisation de diffusion d'air débouchant dans une canalisation d'injection d'air solidaire d'un capot d'inverseur de poussée et débouchant vers l'extérieur de la nacelle au niveau du bord de fuite de celle-ci, chaque canalisation d'injection d'air étant apte à se désaccoupler de la canalisation de diffusion d'air correspondante lors du coulissement vers l'aval du capot d'inverseur de poussée correspondant.

Avec une telle configuration, l'air prélevé dans le canal primaire emprunte la canalisation de prélèvement d'air logée dans **la** manche d'entrée d'air, puis l'une des deux canalisations de diffusion d'air solidaires des capots de maintenance et enfin la canalisation d'injection d'air correspondante. Chaque canalisation d'injection d'air étant apte à se désaccoupler de la canalisation de diffusion d'air correspondante, la turbomachine selon l'invention permet de tenir compte du fait que les capots d'inverseur de poussée coulissent vers l'aval lors du déploiement de l'inverseur. De la sorte, il est possible pour ce type de turbomachine d'acheminer l'air prélevé dans le canal de soufflante jusqu'au bord de fuite de la nacelle.

Selon une disposition avantageuse, les capots de maintenance sont mobiles par rapport à la manche d'entrée d'air par pivotement autour de charnières parallèles à l'axe longitudinal de la turbomachine et situées au niveau d'un pylône de fixation de la nacelle sous une aile d'avion, chaque canalisation de diffusion d'air étant apte à se déformer lors du pivotement du capot de maintenance correspondant. Cette caractéristique permet de tenir compte du fait que les capots de maintenance peuvent pivoter lors des opérations de maintenance sur le générateur de gaz.

Dans ce cas, chaque canalisation de diffusion d'air est de préférence réalisée en un matériau souple de façon à faciliter la déformation de la canalisation de diffusion d'air.

De préférence, chaque canalisation d'injection d'air comporte un embout qui est conique de façon à faciliter l'accouplement et le désaccouplement de la canalisation de prélèvement d'air.

La turbomachine peut également comporter une vanne de commande montée sur la canalisation de prélèvement d'air.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale d'une turbomachine selon l'invention ;
- la figure 2 est une vue en perspective et coupe selon II-II de la figure 1 ;
- les figures 3 à 6 sont des détails de la turbomachine de la figure 2 ; et
- la figure 7 est une vue en coupe selon un plan radial d'une partie de la nacelle de la turbomachine de la figure 1.

### Description détaillée d'un mode de réalisation

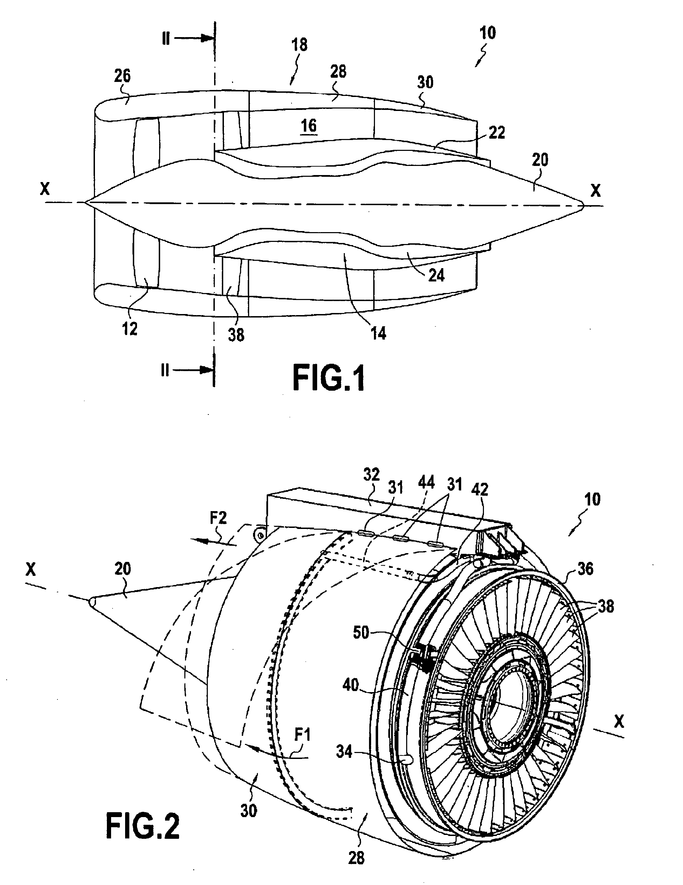

La turbomachine 10 d'axe longitudinal X-X représentée sur la figure 1 est du type à double flux.

De façon bien connue en soi, elle comporte notamment une soufflante 12 qui est entraînée par un générateur de gaz 14 et un canal annulaire de soufflante 16 délimité extérieurement par une nacelle 18.

La turbomachine 10 comporte également un corps annulaire central 20 centré sur l'axe longitudinal X-X et un capotage annulaire primaire 22 disposé coaxialement autour du corps central 20 de façon à délimiter avec celui-ci un canal annulaire primaire 24 pour l'écoulement d'un flux gazeux du générateur de gaz 14.

D'amont en aval selon le sens d'écoulement des flux à l'intérieur de la turbomachine, la nacelle 18 comporte une manche annulaire d'entrée d'air 26, deux capots de maintenance 28 en forme de demi-cylindres (un seul est visible sur la figure 2) et deux capots d'inverseur de poussée 30 en forme de demi-cylindres (un seul est visible sur la figure 2).

Les capots de maintenance 28 sont situés dans la partie centrale de la nacelle. Ces capots sont mobiles par rapport à la manche d'entrée d'air 26 par pivotement autour de charnières 31 qui sont parallèles à l'axe longitudinal X-X et situées au niveau d'un pylône de fixation 32 de la nacelle sous une aile d'avion.

Ainsi, comme représenté en pointillés sur la figure 2, chaque capot de maintenance 28 peut se soulever en pivotant dans le sens de la flèche F1 autour de sa charnière. Dans la position d'ouverture des capots, un accès au générateur de gaz est ainsi dégagé pour faciliter les opérations de maintenance sur la turbomachine. Ce pivotement des capots de maintenance peut être assuré par des vérins hydrauliques.

Les capots d'inverseur de poussée 30 composent pour partie le système d'inversion de poussée de la turbomachine. Un tel système bien connu en soi sert à augmenter la sécurité de l'avion en fournissant une force de freinage lors de l'atterrissage de celui-ci.

Le système d'inversion de poussée utilisé ici est du type connu à grilles : les capots 30 sont disposés à l'extrémité aval de la nacelle et sont mobiles par rapport à la manche d'entrée d'air 26 par coulissement selon une direction parallèle à l'axe longitudinal X-X de la turbomachine.

Plus précisément, comme représenté en pointillés sur la figure 2, chaque capot d'inverseur de poussée 30 peut coulisser vers l'aval dans le sens de la flèche F2, ce coulissement étant par exemple assuré par un système de vérins hydrauliques (non représenté sur les figures).

La position d'ouverture des capots 30 correspond à la position d'inversion de poussée : lorsqu'ils sont dans cette position, les capots 30 laissent apparaître des ouvertures (non représentées sur les figures) débouchant dans le canal de soufflante 16 et inclinées de façon à permettre de diriger le flux d'air empruntant ces ouvertures vers l'amont pour fournir une poussée inverse à l'avion. Les détails d'un système d'inversion de poussée à grilles sont bien connus de l'homme du métier et ne sont donc pas repris ici.

Selon l'invention, il est prévu de prélever de l'air circulant dans le canal primaire 24 pour l'injecter au niveau du bord de fuite de la nacelle 18, et plus précisément au niveau du bord de fuite des capots d'inverseur de poussée 30.

A cet effet, la turbomachine selon l'invention comporte un orifice (ou écope) de prélèvement d'air 34 dans le canal primaire 24. Comme représenté sur la figure 2, cet orifice de prélèvement d'air 34 peut être pratiqué au travers d'un carter intermédiaire 36 de la turbomachine et traverser le canal de soufflante 16 en transitant à l'intérieur d'une aube fixe 38 de redresseur de soufflante.

L'orifice de prélèvement d'air 34 débouche également dans une canalisation de prélèvement d'air 40 qui est fixe et logée à l'intérieur de la manche d'entrée d'air 26 de la nacelle 18.

Comme représenté sur les figures 2 à 6, cette canalisation de prélèvement d'air 40 peut être fixée autour du carter intermédiaire 36 de la turbomachine et « remonter jusqu'à midi », c'est à dire jusqu'au pylône 32 de la turbomachine sur lequel elle est également fixée.

A son extrémité opposée à l'orifice de prélèvement d'air, chaque canalisation de prélèvement d'air 40 débouche au niveau du pylône 32 dans deux canalisations de diffusion d'air 42 qui sont solidaires chacune d'un capot de maintenance 28.

Les canalisations de diffusion d'air 42 sont, d'une part reliées aux canalisations de prélèvement d'air 40 qui sont fixes et, et d'autre part fixées à un capot de maintenance qui est mobile. Afin de pouvoir suivre le mouvement de pivotement de ces capots, chaque canalisation de diffusion d'air 42 est donc apte à se déformer lors du pivotement du capot de maintenance 28 correspondant.

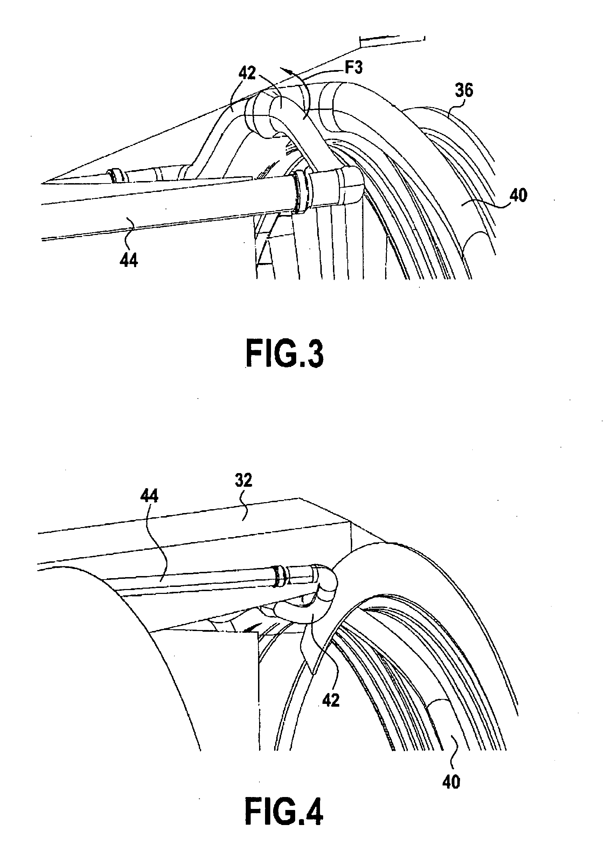

Ainsi, sur l'exemple de réalisation de la figure 3, les capots de maintenance (non représentés pour des raisons de clarté) sont en position fermée, tandis que sur la figure 4 ils sont en position ouverte (c'est-à-dire qu'ils ont pivoté vers le pylône 32). Sur ces figures, on constate bien que les canalisations de diffusion d'air 42 ont également pivoté dans le sens indiqué par la flèche F3 (figure 3).

Pour permettre un tel pivotement des canalisations de diffusion d'air 42, celles-ci sont avantageusement réalisées en un matériau souple, tel que par exemple en matière plastique pouvant être recouvert de treillis pour en renforcer la rigidité.

Par ailleurs, chaque canalisation de diffusion d'air 42 débouche à son extrémité opposée à la canalisation de prélèvement d'air dans une canalisation d'injection d'air 44 qui est solidaire du capot d'inverseur de poussée 30 correspondant.

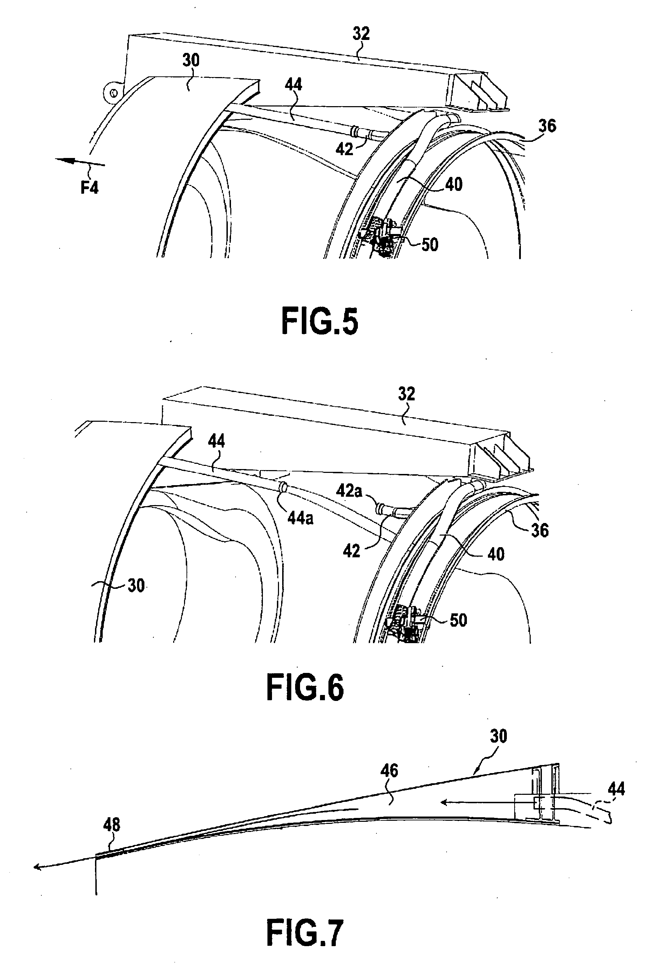

Comme représenté sur la figure 7 qui est une vue en coupe radiale d'un capot d'inverseur de poussée 30, chaque canalisation d'injection d'air 44 débouche vers l'extérieur de la nacelle au niveau du bord de fuite de celle-ci.

De façon plus précise, chaque canalisation d'injection d'air 44 débouche à son extrémité aval dans une cavité 46 formée à l'intérieur du capot d'inverseur de poussée 30 correspondant, cette cavité étant ouverte au niveau du bord de fuite du capot par une ou plusieurs ouvertures 48.

Les canalisations d'injection d'air 44 sont, d'une part reliées à une canalisation de diffusion d'air 42, et d'autre part fixées à un capot d'inverseur de poussée qui est mobile par coulissement longitudinal.

Afin de tenir compte du coulissement (vers l'amont ou vers l'aval) des capots d'inverseur de poussée, chaque canalisation d'injection d'air 42 est apte à se désaccoupler et à s'accoupler avec la canalisation de diffusion d'air correspondante.

Ainsi, dans le mode de réalisation de la figure 5 qui correspond à une position fermée des capots d'inverseur de poussée 30, les canalisations d'injection d'air 44 sont accouplées aux canalisations de diffusion d'air 42 de sorte que l'air prélevé dans le canal primaire est bien injecté depuis le bord de fuite de la nacelle.

En revanche, dans le mode de réalisation de la figure 6, les capots d'inverseur de poussée ont coulissé vers l'aval par rapport à la figure 5 (dans le sens de la flèche F4) de sorte que les canalisations d'injection d'air 44 qui sont solidaires de ces capots se sont désaccouplées des canalisations de prélèvement d'air. Dans cette position correspondant à l'inversion de poussée, l'air prélevé dans le canal primaire n'est donc pas acheminé jusqu'au bord de fuite de la nacelle.

Une fois la phase d'inversion de poussée terminée, les capots d'inverseur de poussée sont fermés et les canalisations d'injection d'air 44 sont à nouveau accouplées aux canalisations de diffusion d'air 42.

Comme représenté sur la figure 6, afin de faciliter l'accouplement et le désaccouplement des canalisations d'injection et de diffusion, chaque canalisation d'injection d'air 44 comporte un embout 44a de forme sensiblement conique, l'embout 42a des canalisations de diffusion d'air 42 étant de forme complémentaire.

Bien entendu, d'autres moyens pour assurer le guidage des canalisations d'injection d'air et ainsi faciliter l'accouplement avec les canalisations de diffusion d'air peuvent être utilisés.

Selon une caractéristique avantageuse de l'invention, la turbomachine comporte en outre une vanne 50 qui est montée sur la canalisation de prélèvement d'air 40 et qui permet de commander les caractéristiques de prélèvement d'air dans le canal de soufflante (marche/arrêt, débit d'air prélevé, etc.).

Il est à noter que pour des raisons de clarté des dessins, les fixations des différentes canalisations sur les différents capots et organes de la turbomachine ne sont pas représentées sur l'ensemble des figures. Ces fixations sont toutefois bien connues en soi pour l'homme du métier.

## Revendications

1. Turbomachine (10) à double flux , comportant une soufflante (12) entraînée par un générateur de gaz (14), un canal annulaire de soufflante (16) délimité extérieurement par une nacelle (18), et un canal annulaire primaire (24) d'écoulement d'un flux gazeux issu du générateur de gaz, la nacelle comportant d'amont en aval :
une manche fixe d'entrée d'air (26) ;
deux capots demi-cylindriques de maintenance (28) ; et
deux capots demi-cylindriques d'inverseur de poussée (30) qui sont mobiles par rapport à la manche d'entrée d'air (26) par coulissement selon une direction parallèle à l'axe longitudinal de la turbomachine ;
**caractérisée en ce qu'**elle comporte en outre au moins un orifice de prélèvement d'air (34) dans le canal primaire (24), l'orifice débouchant dans une canalisation de prélèvement d'air (40) logée à l'intérieur de la manche d'entrée d'air de la nacelle, la canalisation de prélèvement d'air débouchant au niveau d'un pylône (32) dans deux canalisations de diffusion d'air (42) solidaires chacune d'un capot de maintenance, chaque canalisation de diffusion d'air débouchant dans une canalisation d'injection d'air (44) solidaire d'un capot d'inverseur de poussée et débouchant vers l'extérieur de la nacelle au niveau du bord de fuite de celle-ci, chaque canalisation d'injection d'air (44) étant apte à se désaccoupler de la canalisation de diffusion d'air (42) correspondante lors du coulissement vers l'aval du capot d'inverseur de poussée (30) correspondant.

2. Turbomachine selon la revendication 1, dans laquelle les capots de maintenance (28) sont mobiles par rapport à la manche d'entrée d'air (26) par pivotement autour de charnières parallèles à l'axe longitudinal (X-X) de la turbomachine et situées au niveau d'un pylône de fixation (32) de la nacelle sous une aile d'avion, chaque canalisation de diffusion d'air (42) étant apte à se déformer lors du pivotement du capot de maintenance (28) correspondant.

3. Turbomachine selon la revendication 2, dans laquelle chaque canalisation de diffusion d'air (42) est réalisée en un matériau souple.

4. Turbomachine selon l'une quelconque des revendications 1 à 3, dans laquelle chaque canalisation d'injection d'air (44) comporte un embout (44a) qui est conique.

5. Turbomachine selon l'une quelconque des revendications 1 à 4, comportant en outre une vanne de commande (50) montée sur la canalisation de prélèvement d'air (40).

## Claims

1. A bypass turbomachine (10) having a fan (12) driven by a gas generator (14), an annular fan channel (16) defined externally by a nacelle (18), and a primary annular channel (24) for passing a flow of gas coming from the gas generator, the nacelle comprising from upstream to downstream:
· a stationary air inlet sleeve (26);
· two semi-cylindrical maintenance covers (28); and
· two semi-cylindrical thrust reverser covers (30) that are movable relative to the air inlet sleeve (26) by sliding in a direction parallel to the longitudinal axis of the turbomachine;
the turbomachine being **characterized in that** it further comprises at least one air takeoff orifice (34) in the primary channel (24), the orifice leading to an air takeoff pipe (40) housed inside the air inlet sleeve of the nacelle, the air takeoff pipe opening out, in the vicinity of a pylon (32), into two air diffusion pipes (42), each secured to a respective maintenance cover, each air diffusion pipe opening out into an air injection pipe (44) that is secured to a respective thrust reverser cover and that itself opens out towards the outside of the nacelle via the trailing edge thereof, each air injection pipe (44) being suitable for uncoupling from the corresponding air diffusion pipe (42) on the corresponding thrust reverser cover (30) sliding downstream.

2. A turbomachine according to claim 1, in which the maintenance covers (28) are movable relative to the air inlet sleeve (26) by pivoting about hinges parallel to the longitudinal axis (X-X) of the turbomachine and situated in the vicinity of a pylon (32) for fastening the nacelle under an airplane wing, each air diffusion pipe (42) being suitable for deforming during pivoting of the corresponding maintenance cover (28).

3. A turbomachine according to claim 2, in which each air diffusion pipe (42) is made of a flexible material.

4. A turbomachine according to any one of claims 1 to 3, in which each air injection pipe (44) includes an endpiece (44a) that is conical.

5. A turbomachine according to any one of claims 1 to 4, further including a control valve (50) mounted on the air takeoff pipe (40).

## Patentansprüche

1. Zweistrom-Turbomaschine (10), die einen Verdichter (12) aufweist, der von einem Gasgenerator (14) angetrieben wird, einen ringförmigen Verdichterkanal (16), der außen von einer Gondel (18) abgegrenzt wird, und einen ringförmigen Hauptfließkanal eines Gasstroms, der aus dem Gasgenerator stammt, wobei die Gondel von stromaufwärts nach stromabwärts aufweist:
eine stationäre Lufteintrittshaube (26),
zwei halbzylindrische Wartungshauben (28) und
zwei halbzylindrische Schubumkehrerhauben (30), die in bezug zu der Lufteintrittshaube (26) durch Gleiten entlang einer Richtung parallel zu der Längsachse der Turbomaschine beweglich sind,
**dadurch gekennzeichnet, daß** sie ferner mindestens eine Luftentnahmeöffnung (34) in dem Hauptkanal (24) aufweist, wobei die Öffnung in eine Luftentnahmekanalisation (40) mündet, die im Inneren der Lufteintrittshaube der Gondel untergebracht ist, wobei die Luftentnahmekanalisation auf dem Niveau eines Ständers (32) in zwei Luftverteilungskanalisationen (42) mündet, die jeweils fest mit einer Wartungshaube verbunden sind, wobei jede Luftverteilungskanalisation in eine Lufteinspritzkanalisation (44) mündet, die fest mit einer Schubumkehrerhaube verbunden ist und aus der Gondel auf dem Niveau der Austrittskante dieser heraus mündet, wobei sich jede Lufteinspritzkanalisation (44) von der entsprechenden Luftverteilungskanalisation (42) beim Gleiten nach stromabwärts der entsprechenden Schubumkehrerhaube (30) abkoppeln kann.

2. Turbomaschine nach Anspruch 1, bei der die Wartungshauben (28) in bezug zu der Lufteintrittshaube (26) durch Schwenken um Scharniere, die zu der Längsachse (X-X) der Turbomaschine parallel sind und sich auf dem Niveau eines Befestigungsständers (32) der Gondel unter dem Flugzeugflügel befinden, beweglich sind, wobei sich jede Luftverteilungskanalisation (42) beim Schwenken der entsprechenden Wartungshaube (28) verformen kann.

3. Turbomaschine nach Anspruch 2, bei der jede Luftverteilungskanalisation (42) aus einem biegsamen Werkstoff hergestellt ist.

4. Turbomaschine nach einem der Ansprüche 1 bis 3, bei der jede Lufteinspritzkanalisation (44) einen konischen Ansatz (44a) aufweist.

5. Turbomaschine nach einem der Ansprüche 1 bis 4, die ferner ein Steuerventil (50) aufweist, das auf die Luftentnahmekanalisation (40) montiert ist.
